(19) Europäisches Patentamt
European Patent Office
Office européen des brevets

(11) **EP 2 653 751 A1**

(12) **EUROPÄISCHE PATENTANMELDUNG**

(43) Veröffentlichungstag:
**23.10.2013  Patentblatt 2013/43**

(51) Int Cl.:
***F16H 57/033*** *(2012.01)*

(21) Anmeldenummer: **12164446.2**

(22) Anmeldetag: **17.04.2012**

| | |
|---|---|
| (84) Benannte Vertragsstaaten:<br>**AL AT BE BG CH CY CZ DE DK EE ES FI FR GB GR HR HU IE IS IT LI LT LU LV MC MK MT NL NO PL PT RO RS SE SI SK SM TR**<br>Benannte Erstreckungsstaaten:<br>**BA ME** | (71) Anmelder: **Siemens Aktiengesellschaft**<br>**80333 München (DE)**<br><br>(72) Erfinder: **Kunert, Jens**<br>**72070 Tuebingen (DE)** |

(54) **Getriebemotorenbaureihe**

(57)  Getriebemotorenbaureihe mit zwei unterschiedliche Zähnezahlen (zla, zlb) aufweisenden Ritzeln und mehreren unterschiedliche Zähnezahlen (z2a, z3a, z4a) aufweisenden Zahnrädern, wobei die Ritzel und die Zahnräder derart ausgebildet sind, dass jedes Ritzel in mehreren Vorbestimmten Achsabständen (a) mit einem der Zahnräder zur Bildung einer ersten Getriebestufe gepaart werden kann, wobei pro Vorbestimmtem Achsabstand (a) ein einziges Zahnrad vorgesehen ist, das derart ausgebildet ist, dass es zur Bildung einer ersten Getriebestufe wahlweise mit dem einen Ritzel oder mit dem anderen Ritzel gepaart werden kann.

## FIG 2

**Bestimmung z2**

| | m_n | x_1 | z_1 | a 70 | 80 | 90 |
|---|---|---|---|---|---|---|
| | | | | z_2 | z_3 | z_4 |
| a | 2 | 0,6 | 16 | 44 | 52 | 61 |
| b | 2 | 0,0029 | 17 | 44 | 52 | 61 |

**Bestimmung x2**

| | m_n | x_1 | z_1 | a 70 | 80 | 90 |
|---|---|---|---|---|---|---|
| | | | | x_2 | x_3 | x_4 |
| a | 2 | 0,6 | 16 | -0,231 | 0,1777 | -0,038 |
| b | 2 | 0,0029 | 17 | -0,217 | 0,1618 | -0,036 |

**Vorgabe/Bestimmung Asn**

| | m_n | Asn1 | z_1 | a 70 | 80 | 90 |
|---|---|---|---|---|---|---|
| | | | | Asn2 | Asn3 | Asn4 |
| a | 2 | -0,05 | 16 | -0,07 | -0,07 | -0,07 |
| b | 2 | -0,05 | 17 | -0,05 | -0,093 | -0,068 |

**Bestimmung Spielwinkel theta**

| | m_n | x_1 | z_1 | a 70 | 80 | 90 |
|---|---|---|---|---|---|---|
| | | | | theta2 [°] | theta3 | theta4 |
| a | 2 | 0,6 | 16 | 0,1563 | 0,1322 | 0,1127 |
| b | 2 | 0,0029 | 17 | 0,1308 | 0,1577 | 0,1105 |

**Differenz abs (theta2a-theta2b)**

| | | | | | |
|---|---|---|---|---|---|
| b | | MAX: 0,0255 | | 0,0255 | 0,0255 | 0,0022 |

**Realisierte Übersetzung**

| | m_n | x_1 | z_1 | a 70 | 80 | 90 |
|---|---|---|---|---|---|---|
| | | | | i=z2/z1 | | |
| a | 2 | 0,6 | 16 | 2,75 | 3,25 | 3,81 |
| b | 2 | 0,0029 | 17 | 2,59 | 3,06 | 3,59 |

**Beschreibung**

Die vorliegende Erfindung betrifft eine Getriebemotorenbaureihe mit zwei unterschiedliche Zähnezahlen aufweisenden Ritzeln und mehreren unterschiedliche Zähnezahlen aufweisenden Zahnrädern, wobei die Ritzel und die Zahnräder derart ausgebildet sind, dass jedes Ritzel in mehreren vorbestimmten Achsabständen mit einem der Zahnräder zur Bildung einer ersten Getriebestufe gepaart werden kann.

Getriebemotorenbaureihen der zuvor beschriebenen Art sind im Stand der Technik bereits bekannt. Sie bilden einen Bausatz aus Einzelkomponenten, aus denen unterschiedliche Getriebemotoren zusammengesetzt werden können, die sich hinsichtlich der Motorbaugröße, den im Getriebe realisierten Übersetzungen oder dergleichen voneinander unterscheiden. Eine sehr hohe Varianz der Übersetzungen eines Getriebes wird vor allem durch eine Vielzahl verschiedener Übersetzungen in der ersten motorseitigen Übersetzungsstufe erzielt. Zwischen- und Endstufen eines Getriebes weisen dagegen eine eher geringe Varianz auf. Die insgesamt benötigte Anzahl an Verzahnungsteilen wird somit vornehmlich durch die erste Stufe geprägt. Dabei sind die Getriebemotorenhersteller aus Kostengründen stets bestrebt, die Anzahl der Einzelkomponenten einer Getriebemotorenbaureihe möglichst gering zu halten.

Eine Reduzierung der Einzelkomponenten einer Getriebemotorenbaureihe wurde bislang in erster Linie dadurch erzielt, dass ein Ritzel auf möglichst vielen verschiedenen Achsabständen eingesetzt werden kann, wobei für jeden Achsabstand pro Ritzel ein gesondertes Zahnrad vorgesehen ist. So sind für einen ersten Achsabstand mit zwei Ritzeln und zwei Zahnrädern insgesamt zwei verschiedene Übersetzungen realisierbar. Für jeden weiteren Achsabstand können mit denselben Ritzeln und zwei zusätzlichen Zahnrädern nochmals zwei Übersetzungen erzielt werden. Auf diese Weise konnte die Varianz der Ritzel und somit die Anzahl der Einzelkomponenten einer Getriebemotorenbaureihe bereits deutlich eingeschränkt werden.

Ausgehend von diesem Stand der Technik ist es eine Aufgabe der vorliegenden Erfindung, die Anzahl der Einzelkomponenten einer Getriebemotorenbaureihe der eingangs genannten Art weiter zu reduzieren, ohne dabei die Varianz der realisierbaren Übersetzungen einzuschränken.

Zur Lösung dieser Aufgabe schafft die vorliegende Erfindung eine Getriebemotorenbaureihe der eingangs genannten Art, die dadurch gekennzeichnet ist, dass pro vorbestimmtem Achsabstand ein einziges Zahnrad vorgesehen ist, das derart ausgebildet ist, dass es zur Bildung einer ersten Getriebestufe wahlweise mit dem einen Ritzel oder mit dem anderen Ritzel gepaart werden kann. Dank dieses Aufbaus der erfindungsgemäßen Getriebemotorenbaureihe sind bei einem ersten Achsabstand mit den beiden Ritzeln und einem einzigen Zahnrad zwei verschiedene Übersetzungen realisierbar. Für jeden weiteren Achsabstand können mit denselben Ritzeln und einem zusätzlichen Zahnrad nochmals zwei Übersetzungen erzielt werden. Auf diese Weise wird eine große Varianz bei einer sehr geringen Anzahl von Einzelkomponenten erzielt, was mit sehr geringen Kosten einhergeht.

Bevorzugt unterscheiden sich die Zähnezahlen der beiden Ritzel um einen Zahn voneinander, so dass gilt: $z1a = z1b + 1$.

Gemäß einer Ausgestaltung der vorliegenden Erfindung sind die Profilverschiebungsfaktoren der beiden Ritzel derart gewählt, dass die jeweilige Differenz zwischen den Drehspielwinkeln, die sich jeweils beim Kämmen zwischen dem pro vorbestimmtem Achsabstand vorgesehenen einzigen Zahnrad und den beiden Ritzeln einstellen, bei mehreren vorbestimmten Achsabständen vorab definierten Akzeptanzkriterien genügt, wobei die Differenz vorteilhaft minimal ist. Entsprechend werden die miteinander kämmenden Komponenten optimal aufeinander eingestellt. Gemäß einer Ausgestaltung der vorliegenden Erfindung zählt/zählen zu den Akzeptanzkriterien eine Drehspielabweichung zum Standardwert nahe Null und/oder ein Einhalten eines gewünschten Übersetzungsverhältnisses und/oder ein Erreichen geforderter Festigkeitswerte.

Weitere Vorteile und Merkmale der vorliegenden Erfindung werden anhand der nachfolgenden Beschreibung einer Ausführungsform einer erfindungsgemäßen Getriebemotorenbaureihe unter Bezugnahme auf die beiliegende Zeichnung deutlich. Darin ist

Figur 1    eine tabellarische Ansicht von Einzelparametern einer mit zwei Ritzeln und verschiedenen Zahnrädern realisierbaren ersten Getriebestufe einer bekannten Getriebemotorenbaureihe und

Figur 2    eine tabellarische Ansicht von Einzelparametern einer mit zwei Ritzeln und verschiedenen Zahnrädern realisierbaren ersten Getriebestufe einer Getriebemotorenbaureihe gemäß einer Ausführungsform der vorliegenden Erfindung.

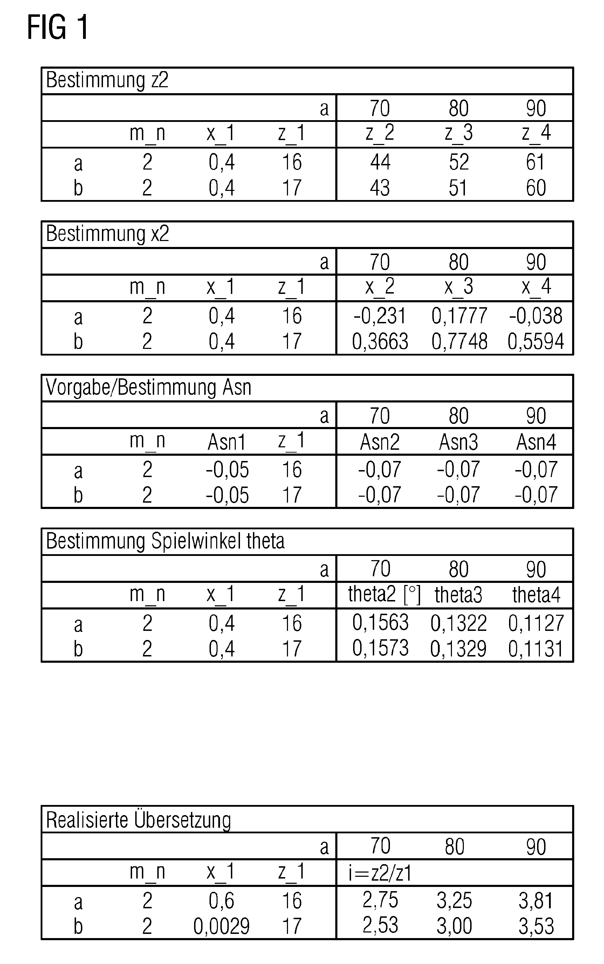

Nachfolgend wird beispielhaft erläutert, wie die in Figur 1 aufgeführten Parameter der bekannten Getriebemotorenbaureihe geändert werden können, um eine erfindungsgemäße Getriebemotorenbaureihe zu erzielen.

Gemäß Figur 1 umfasst eine bekannte Getriebemotorenbaureihe eine erste Getriebestufe, die zwei Ritzel mit den Zähnezahlen $z1a$ und $z1b$ umfasst, wobei $z1a = 16$ und $z1b = 17$ ist. Beide Ritzel $z1a$ und $z1b$ weisen denselben Normalmodul $mn$ auf, wobei gilt: $mn = 2$ mm.

Für den Achsabstand a = 70 mm ist für das Ritzel mit der Zähnezahl z1a ein Zahnrad mit der Zähnezahl z2a = 44 vorgesehen. Dem Ritzel mit der Zähnezahl z1b ist bei gleichem Achsabstand a = 70 mm ein weiteres Zahnrad mit der Zähnezahl z2b = 43 zugeordnet. Durch Paarung des Ritzels mit der Zähnezahl z1a mit dem Zahnrad mit der Zähnezahl z2a und durch Paarung des Ritzels mit der Zähnezahl z1b mit dem Zahnrad mit der Zähnezahl z2b können entsprechend zwei verschiedene Übersetzungen bei diesem Achsabstand realisiert werden. Für den Achsabstand 80 mm sind zwei weitere Zahnräder mit den Zähnezahlen z3a = 52 und z3b = 51 vorhanden, und für den Achsabstand a = 90 mm sind Zahnräder mit den Zähnezahlen z4a = 61 und z4b = 60 vorgesehen. Insgesamt ergeben sich somit sechs verschiedene mögliche Übersetzungen i für die erste Getriebestufe.

Mit

$$x2 = (z1 + z2) * (inv(\alpha wt) - inv(\alpha t)) / (2 * \tan(\alpha n)) - x1$$

und

$$\alpha wt = \arccos(mn * (z1 + z2) * \cos(\alpha t) / \cos(\text{ß}) / 2 / a)$$

sowie

$$\alpha t = \arctan(\tan(\alpha n) / \cos(\text{ß}))$$

ergeben sich bei vorgegebenen Werten für x1, $\alpha$n, $\beta$, mn, z1 und z2 die in der Tabelle aufgeführten Profilverschiebungsfaktoren x2a, x2b, x3a, x3b, x4a und x4b, wobei $\alpha$wt der Betriebseingriffswinkel, $\alpha$t der Stirneingriffswinkel, $\alpha$n der Normaleingriffswinkel, $\beta$ der Schrägungswinkel, mn der Bormalmodul und a der Achsabstand ist.

Die Zahndickenabmaße Asn folgen vereinbarten Festlegungen für ein gewünschtes Drehflankenspiel und können beispielsweise entsprechenden Normen wie der DIN 3967 entnommen werden.

Mit

$$\upsilon2 = 2 * jt / dw2$$

und

$$jt = -(Asn1 + Asn2) / \cos(\text{ß})$$

sowie

$$dw2 = 2 * a * z2 / (z1 + z2)$$

wird der Drzehspielwinkel $\upsilon$2 ermittelt, wobei der Übersichtlichkeit halber auf die Darstellung zusätzlicher aber hier nicht relevanter Einflussgröben auf das Drehspiel wie z. B. die Achsabstandstoleranz verzichtet wurde. Es stellen jt das theoretische Flankenspiel, Asn die gewählten Zahndickenabmaße und dw2 den Wälzkreisdurchmesser des Rades dar. Somit gilt der hier dargestellte Drehspielwinkel bei Messung am Rad.

Durch Vorgabe der Werte für x1, $\alpha$n, $\beta$, mn, z1 und z2 und geeignete Wahl der Zahndickenabmaße Asn ergeben sich die in der Tabelle angegebenen weiteren Daten der beiden Ritzel und der sechs Zahnräder ebenso wie die Werte für die Drehspielwinkel $\upsilon$2 der sechs Übersetzungen i.

Mit einer solchen Getriebemotorenbaureihe lassen sich mit insgesamt acht Einzelkomponenten sechs verschiedene Übersetzungen realisieren, wie es aus dem letzten Block der Tabelle hervorgeht.

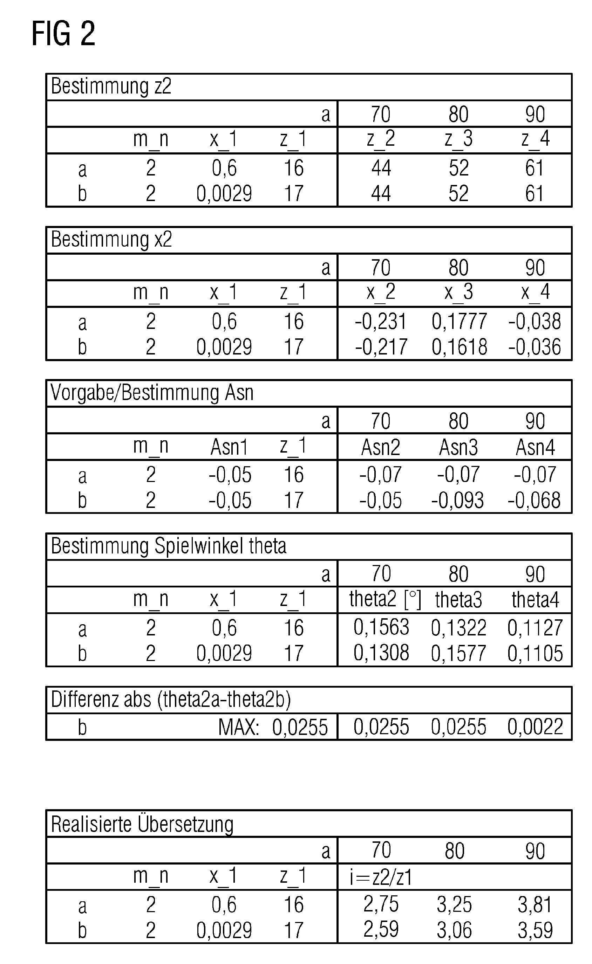

Figur 2 zeigt analog zu Figur 1 eine tabellarische Ansicht der zuvor beschriebenen Parameter, wobei die Parameter jedoch derart modifiziert sind, dass sich eine erste Getriebestufe einer Getriebemotorenbaureihe gemäß einer Ausführungsform der vorliegenden Erfindung ergibt.

Ausgangspunkt sind auch hier zwei Ritzel mit den Zähnezahlen $z1a = 16$ und $z1b = 17$, die denselben Normalmodul $mn = 2$ aufweisen. Im Gegensatz zu der in Figur 1 dargestellten Tabelle sind jedoch die Profilverschiebungsfaktoren $x1a$ und $x1b$ derart angepasst, dass über mehrere Räder und Achsabstände hinweg gleichzeitig nur eine geringe Abweichung zum früher dargestellten Zahnflankenspiel gegeben ist. Dafür wird für $z1a < z1b$, wie es vorliegend der Fall ist, $x1a$ hinreichend groß und $x1b$ hinreichend klein gewählt. Im vorliegenden Beispiel ist $x1a = 0{,}6$ und $x1b = 0{,}0029$. Für die Achsabstände $a = 70$ mm, $a = 80$ mm und $a = 90$ mm ist jeweils nur ein einzelnes Zahnrad mit der Zähnezahl $z2$ vorgesehen, das mit beiden Ritzeln zur Erzielung unterschiedlicher Übersetzungen $i$ kämmen kann, wobei vorliegend gilt: $z2a = z2b = 44$; $z3a = z3b = 52$ und $z4a = z4b = 61$.

Mit den Profilverschiebungsfaktoren $x1$ der beiden Ritzel und den Zähnezahlen $z2$, $z3$, $z4$ der drei Zahnräder ergeben sich rechnerisch die in der Tabelle aufgeführten Profilverschiebungsfaktoren $x2a$, $x2b$, $x3a$, $x3b$, $x4a$ und $x4b$. Die Auslegung ist so zu gestalten, dass die Profilverschiebungsfaktoren $x2a$ und $x2b$ annähernd gleich sind. Analoges gilt für die Profilverschiebungsfaktoren $x3a$ und $x3b$ sowie $x4a$ und $x4b$.

Durch die noch verbleibende Differenz zwischen $x2a$ und $x2b$, $x3a$ und $x3b$ sowie $x4a$ und $x4b$ entsteht ein verändertes Drehflankenspiel. Dieses lässt sich als Änderung des Zahndickenabmaßes am Rad $\Delta Asn2$, $\Delta Asn3$ bzw. $\Delta Asn4$ ausdrücken. Der Betrag der Änderung des Zahndickenabmaßes ist wie folgt zu errechnen:

$$\Delta Asn2 = \left|(x2a - x2b) * mn * 2 * \tan(\alpha n)\right|$$

$$\text{Analoges gilt für } \Delta Asn3 \text{ und } \Delta Asn4.$$

Hat die Auslegung über alle betrachteten Achsabstände $a$ akzeptable Abweichungen des Drehflankenspiels ergeben, so können die beiden Zahnräder pro Achsabstand $a$ gemäß der Tabelle in Figur 1 jeweils durch ein einzelnes Zahnrad ersetzt werden, wie es der Tabelle in Figur 2 zu entnehmen ist. Somit kann pro Achsabstand $a$ ein einzelnes Zahnrad mit beiden Ritzeln gepaart werden, wodurch jeweils zwei Übersetzungen $i$ realisierbar sind, wie es im letzten Block der Tabelle in Figur 2 dargestellt ist. Akzeptanzkriterien sind neben den rein geometrischen Randbedingungen beispielsweise das Vermeiden eines Klemmens der Räder, wofür das Gesamtdrehspiel größer als Null sein muss, das Über- oder Unterschreiten eines gewünschten Drehspiels, das Erreichen eines gewünschten Übersetzungsbereiches, das Erreichen geforderter Festigkeitswerte oder dergleichen.

Wird dieses Vorgehen über möglichst viele verschiedene Ritzel $z1a$ und $z1b$ und Achsabstände $a$ der ersten Stufe einer Getriebemotorenbaureihe angewandt, ergibt sich ein entsprechend erhöhtes Einsparpotential. Wegen der hohen Anzahl der Randbedingungen empfiehlt sich jeweils ein numerisches Vorgehen zur Wahl optimaler Werte für $x1a$ und $x1b$, wobei vorliegend davon ausgegangen wird, dass die weiteren Geometriedaten bereits vorliegen. In der Tabelle gemäß Figur 2 ist beispielsweise als Randbedingung angegeben, dass die Differenz $|\upsilon 2a - \upsilon 2b| \leq 0{,}0255$ sein soll.

Bei der zuvor beschriebenen, bevorzugt iterativen Vorgehensweise wurden Werte für $x1$ gewählt und ausgehend von dieser Wahl Werte für $x2$ berechnet. Alternativ können in analoger Weise natürlich auch Werte für $x2$ gewählt und daraufhin Werte für $x1$ berechnet werden. In diesem Fall gilt dann

$$x1 = (z1 + z2) * (\text{inv}(\alpha wt) - \text{inv}(\alpha t)) / (2 * \tan(\alpha n)) - x2$$

Die Getriebemotorenbaureihe gemäß der vorliegenden Erfindung zeichnet sich insbesondere dadurch aus, dass in der ersten Getriebestufe mit wenigen Einzelkomponenten viele verschiedene Übersetzungen realisierbar sind, wodurch eine kostengünstige Getriebemotorenbaureihe bereitgestellt wird.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

**Patentansprüche**

1. Getriebemotorenbaureihe mit zwei unterschiedliche Zähnezahlen (z1a, z1b) aufweisenden Ritzeln und mehreren unterschiedliche Zähnezahlen (z2a, z3a, z4a) aufweisenden Zahnrädern, wobei die Ritzel und die Zahnräder derart ausgebildet sind, dass jedes Ritzel in mehreren vorbestimmten Achsabständen (a) mit einem der Zahnräder zur Bildung einer ersten Getriebestufe gepaart werden kann, **dadurch gekennzeichnet, dass** pro vorbestimmtem Achsabstand (a) ein einziges Zahnrad vorgesehen ist, das derart ausgebildet ist, dass es zur Bildung einer ersten Getriebestufe wahlweise mit dem einen Ritzel oder mit dem anderen Ritzel gepaart werden kann.

2. Getriebemotorenbaureihe nach Anspruch 1, **dadurch gekennzeichnet, dass** sich die Zähnezahlen (z1a, z1b) der beiden Ritzel um einen Zahn voneinander unterscheiden.

3. Getriebemotorenbaureihe nach einem der vorhergehenden Ansprüche, **dadurch gekennzeichnet, dass** die Profilverschiebungsfaktoren (x1a, x1b) der beiden Ritzel derart gewählt sind, dass die jeweilige Differenz zwischen den Drehspielwinkeln ($\upsilon$2a, $\upsilon$2b), die sich jeweils beim Kämmen zwischen dem pro vorbestimmtem Achsabstand (a) vorgesehenen Zahnrad und den beiden Ritzeln einstellen, bei mehreren vorbestimmten Achsabständen (a) definierten Akzeptanzkriterien genügt, insbesondere minimal ist.

4. Getriebemotorenbaureihe nach Anspruch 3, **dadurch gekennzeichnet, dass** zu den Akzeptanzkriterien eine Drehspielabweichung zum Standardwert nahe Null und/oder ein Einhalten eines gewünschten Übersetzungsverhältnisses und/oder ein Erreichen geforderter Festigkeitswerte zählt/zählen.

# FIG 1

| Bestimmung z2 | | | | | | |
|---|---|---|---|---|---|---|
| | | | a | 70 | 80 | 90 |
| | m_n | x_1 | z_1 | z_2 | z_3 | z_4 |
| a | 2 | 0,4 | 16 | 44 | 52 | 61 |
| b | 2 | 0,4 | 17 | 43 | 51 | 60 |

| Bestimmung x2 | | | | | | |
|---|---|---|---|---|---|---|
| | | | a | 70 | 80 | 90 |
| | m_n | x_1 | z_1 | x_2 | x_3 | x_4 |
| a | 2 | 0,4 | 16 | -0,231 | 0,1777 | -0,038 |
| b | 2 | 0,4 | 17 | 0,3663 | 0,7748 | 0,5594 |

| Vorgabe/Bestimmung Asn | | | | | | |
|---|---|---|---|---|---|---|
| | | | a | 70 | 80 | 90 |
| | m_n | Asn1 | z_1 | Asn2 | Asn3 | Asn4 |
| a | 2 | -0,05 | 16 | -0,07 | -0,07 | -0,07 |
| b | 2 | -0,05 | 17 | -0,07 | -0,07 | -0,07 |

| Bestimmung Spielwinkel theta | | | | | | |
|---|---|---|---|---|---|---|
| | | | a | 70 | 80 | 90 |
| | m_n | x_1 | z_1 | theta2 [°] | theta3 | theta4 |
| a | 2 | 0,4 | 16 | 0,1563 | 0,1322 | 0,1127 |
| b | 2 | 0,4 | 17 | 0,1573 | 0,1329 | 0,1131 |

| Realisierte Übersetzung | | | | | | |
|---|---|---|---|---|---|---|
| | | | a | 70 | 80 | 90 |
| | m_n | x_1 | z_1 | i=z2/z1 | | |
| a | 2 | 0,6 | 16 | 2,75 | 3,25 | 3,81 |
| b | 2 | 0,0029 | 17 | 2,53 | 3,00 | 3,53 |

# FIG 2

| Bestimmung z2 | | | | | | |
|---|---|---|---|---|---|---|
| | | | a | 70 | 80 | 90 |
| | m_n | x_1 | z_1 | z_2 | z_3 | z_4 |
| a | 2 | 0,6 | 16 | 44 | 52 | 61 |
| b | 2 | 0,0029 | 17 | 44 | 52 | 61 |

| Bestimmung x2 | | | | | | |
|---|---|---|---|---|---|---|
| | | | a | 70 | 80 | 90 |
| | m_n | x_1 | z_1 | x_2 | x_3 | x_4 |
| a | 2 | 0,6 | 16 | -0,231 | 0,1777 | -0,038 |
| b | 2 | 0,0029 | 17 | -0,217 | 0,1618 | -0,036 |

| Vorgabe/Bestimmung Asn | | | | | | |
|---|---|---|---|---|---|---|
| | | | a | 70 | 80 | 90 |
| | m_n | Asn1 | z_1 | Asn2 | Asn3 | Asn4 |
| a | 2 | -0,05 | 16 | -0,07 | -0,07 | -0,07 |
| b | 2 | -0,05 | 17 | -0,05 | -0,093 | -0,068 |

| Bestimmung Spielwinkel theta | | | | | | |
|---|---|---|---|---|---|---|
| | | | a | 70 | 80 | 90 |
| | m_n | x_1 | z_1 | theta2 [°] | theta3 | theta4 |
| a | 2 | 0,6 | 16 | 0,1563 | 0,1322 | 0,1127 |
| b | 2 | 0,0029 | 17 | 0,1308 | 0,1577 | 0,1105 |

| Differenz abs (theta2a-theta2b) | | | | |
|---|---|---|---|---|
| b | MAX: 0,0255 | 0,0255 | 0,0255 | 0,0022 |

| Realisierte Übersetzung | | | | | | |
|---|---|---|---|---|---|---|
| | | | a | 70 | 80 | 90 |
| | m_n | x_1 | z_1 | i=z2/z1 | | |
| a | 2 | 0,6 | 16 | 2,75 | 3,25 | 3,81 |
| b | 2 | 0,0029 | 17 | 2,59 | 3,06 | 3,59 |

Europäisches Patentamt

European Patent Office

Office européen des brevets

# EUROPÄISCHER RECHERCHENBERICHT

**Nummer der Anmeldung**

EP 12 16 4446

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 1 215 417 A2 (SEW EURODRIVE GMBH & CO [DE]) 19. Juni 2002 (2002-06-19) * Absätze [0017], [0022], [0024]; Abbildungen 1a,1b * ----- | 1,2 | INV. F16H57/033 |
| X | EP 0 452 739 A (LACHENMAIER S) 23. Oktober 1991 (1991-10-23) * Abbildung 2 * ----- | 1 | |
| A | DE 103 12 941 A1 (SEW EURODRIVE GMBH & CO [DE]) 2. Dezember 2004 (2004-12-02) * das ganze Dokument * ----- | 1-4 | |

RECHERCHIERTE SACHGEBIETE (IPC)

F16H

Der vorliegende Recherchenbericht wurde für alle Patentansprüche erstellt

| Recherchenort | Abschlußdatum der Recherche | Prüfer |
|---|---|---|
| München | 22. Januar 2013 | Hassiotis, Vasilis |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**

EP 12 16 4446

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

22-01-2013

| Im Recherchenbericht angeführtes Patentdokument | | Datum der Veröffentlichung | Mitglied(er) der Patentfamilie | | | Datum der Veröffentlichung |
|---|---|---|---|---|---|---|
| EP 1215417 | A2 | 19-06-2002 | AT | 401515 | T | 15-08-2008 |
| | | | DE | 10062039 | A1 | 04-07-2002 |
| | | | EP | 1215417 | A2 | 19-06-2002 |
| EP 0452739 | A | 23-10-1991 | AT | 112026 | T | 15-10-1994 |
| | | | CA | 2039883 | C | 06-12-1994 |
| | | | DE | 4012188 | A1 | 24-10-1991 |
| | | | EP | 0452739 | A1 | 23-10-1991 |
| | | | ES | 2061096 | T3 | 01-12-1994 |
| | | | JP | 2644097 | B2 | 25-08-1997 |
| | | | JP | 4219551 | A | 10-08-1992 |
| | | | US | 5067361 | A | 26-11-1991 |
| DE 10312941 | A1 | 02-12-2004 | CN | 1754298 | A | 29-03-2006 |
| | | | DE | 10312941 | A1 | 02-12-2004 |

EPO FORM P0461

Für nähere Einzelheiten zu diesem Anhang : siehe Amtsblatt des Europäischen Patentamts, Nr.12/82